# EUROPÄISCHE PATENTSCHRIFT

(11) **EP 1 585 909 B1**
(45) Veröffentlichungstag und Bekanntmachung des Hinweises auf die Patenterteilung: **09.07.2014**
(21) Anmeldenummer: 03704193.6
(22) Anmeldetag: 03.01.2003
(51) Int. Cl.: F16F 9/48, F16F 9/36, F16F 9/02

(54) **FÜHRUNGSSYSTEM MIT PNEUMATISCHER VERZÖGERUNGSVORRICHTUNG**
GUIDE SYSTEM COMPRISING A PNEUMATIC DECELERATION DEVICE
SYSTEME DE GUIDAGE COMPORTANT UN DISPOSITIF PNEUMATIQUE DE RALENTISSEMENT

(43) Veröffentlichungstag der Anmeldung: 19.10.2005
(73) Patentinhaber: Zimmer, Günther, 77866 Rheinau (DE); Zimmer, Martin, 77866 Rheinau (DE)
(72) Erfinder: ZIMMER, Herbert, 77886 Lauf (DE)
(74) Vertreter: Thämer, Wolfgang
(86) Internationale Anmeldenummer: PCT/DE2003/000022
(87) Internationale Veröffentlichungsnummer: WO 2004/061327

(56) Entgegenhaltungen:
- EP-A- 0 768 476
- DE-A- 19 923 530
- DE-U- 29 521 002
- FR-A- 1 120 705
- US-A- 4 376 472
- US-A- 5 884 734

## Beschreibung

Die Erfindung betrifft ein Führungssystem mit einer pneumatischen Verzögerungsvorrichtung, die eine, der Hubbewegung eines in einem Zylinder mittels einer durch interne und externe Kräfte belasteten Kolbenstange axial geführten, mit mindestens einem Kolbendichtelement ausgestatteten, einen Verdrängungsraum gegen die Umgebung abgrenzenden Kolben entgegengerichtete Kraft aufbaut, wobei der Leckagestrom zwischen dem Verdrängungsraum und der Umgebung zumindest hubrichtungsabhängig ist und das Kolbendichtelement die Zylinderinnenwandung zumindest bei Lage des Kolbens in der dem Verdrängungsraum abgewandten Endlage im drucklosen Zustand kontaktiert.

Mittels eines Führungssystems werden Gegenstände, z.B. Schubladen, Türen, etc. auf geometrisch bestimmten Bahnen begrenzter Länge geführt. Um die Massen dieser Gegenstände zu bewegen, werden diese mittels externer und interner Kräfte beschleunigt.

Die internen Kräfte werden durch Speicher potentieller Energie freigesetzt, deren Energiegehalt lage- und/oder spannungsabhängig ist. Vom Speicher abgegebene Energie wird wieder aufgenommen, wenn die ursprüngliche Lage z.B. einer Masse wieder eingenommen wird. Derartige Energiepotentiale sind z.B. ein Schwerepotential oder ein Federpotential. Auf dem geschlossenen Weg wird alle verrichtete Arbeit zurückgewonnen.

Die externen Kräfte sind beispielsweise durch einen Bediener aufgebrachte Kräfte.

Vor Erreichen z.B. der geschlossenen Endlage einer Schublade werden die bewegten Massen mittels einer Verzögerungsvorrichtung abgebremst, um u.a. zum einen Beschädigungen der Führungs-, der Umgebungs- und der geführten Bauteile und zum anderen Geräusche - z.B. Besteckgeklapper in der Schublade - zu vermeiden.

Um die bewegte Masse zu verzögern, wird in einer pneumatischen Zylinder-Kolben-Einheit aus einem durch den Kolben begrenzten Verdrängungsraum Luft gedrosselt in die Umgebung verdrängt.

Elemente des Anmeldegegenstandes sind aus der DE 100 21 762 A1 bekannt. In der Verzögerungseinrichtung wird beim Einfahren des Kolbens die aus dem Verdrängungsraum verdrängte Luft über einen im Kolben angeordneten Kanal abgeführt. Die Verzögerung eines derartigen Systems ist konstant niedrig über den zurückgelegten Hub. Je nach aufgebrachter Energie bleibt der Kolben vor dem Erreichen seiner Endlage stehen oder er prallt bei Erreichen der Endlage u.a. aufgrund der Federeigenschaft der komprimierten Restluft im Zylinder zurück.

Aus der DE 295 21 002 U1 ist eine Verzögerungsvorrichtung mit einer entlang des Kolbenhubes variierenden Verzögerung bekannt. Ein Kolben ist hierfür in einem abgedichteten Zylinder mit sich in Einfahrrichtung vergrößernden Zylinderquerschnitt angeordnet. Während des Rückhubs öffnet bei Druckanstieg im Ausgleichsraum ein im Kolben angeordnetes Rückschlagventil. Eine Endlage kann mit dieser Verzögerungsvorrichtung nur erreicht werden, wenn der Kolben von außen bis in seine Endlage geschoben wird.

Der vorliegenden Erfindung liegt daher die Problemstellung zugrunde, ein auf Dauer betriebssicheres Führungssystem mit einer pneumatischen Verzögerungsvorrichtung zu entwickeln, das bei Erreichen der Endlage ohne Rückprall und/oder harten Anschlag stehen bleibt.

Diese Problemstellung wird mit den Merkmalen des Hauptanspruches gelöst. Dazu weitet sich der Querschnitt des Zylinderinnenraumes entlang des Kolbenhubes zumindest bereichsweise stetig auf, wobei der größte Querschnitt am Ende des Verdrängungsraumes liegt. Das Kolbendichtelement liegt zumindest in der verdrängungsraumseitigen Endlage des Kolbens nicht an der Zylinderinnenwandung abdichtend an. Ab einer definierten Hubstellung des Kolbens verrastet die Kolbenstange mit einem vorgespannten Energiespeicher und entspannt diesen, so dass die freigesetzte interne Kraft der aufgebrachten externen Kraft gleichgerichtet ist.

Beispielsweise beim schnellen Einfahren des Kolbens in den Zylinder wird die Luft im Verdrängungsraum komprimiert. Die Luft, deren Volumen verkleinert wird, kann nicht entweichen. Der Druck im Verdrängungsraum erhöht sich. Hierdurch wird eine der Hubbewegung entgegengerichtete Kraft aufgebaut. Die Hubbewegung des Kolbens wird verzögert.

Schon bei einer ersten Kompression im Verdrängungsraum legt sich das Kolbendichtelement an die Innenwandung des Zylinders an.

Mit zunehmendem Hub des Kolbens weitet sich der Innenquerschnitt des Zylinders auf. Der Außendurchmesser des Kolbendichtelements folgt beispielsweise zu Beginn des Hubes dem Querschnitt. Bei Erreichen der verdrängungsraumseitigen Endlage des Kolbenhubes kann z.B. wegen der starken Querschnittsaufweitung des Zylinderinnenraumes das Kolbendichtelement der Zylinderinnenwandung nicht mehr folgen. Die im Verdrängungsraum komprimierte Luft verformt das Kolbendichtelement. Dessen Dichtwirkung an der Zylinderinnenwandung lässt nach und die Luft strömt z.B. schlagartig aus dem Verdrängungsraum in die Umgebung ab. Dies führt zu einer Angleichung des Luftdruckes zwischen dem Verdrängungsraum und der Umgebung. Durch den großen Druckverlust wirkt jetzt keine selbsthelfende Kraft mehr auf das Kolbendichtelement. Es nimmt wieder seine Ausgangsposition auf dem Kolben ein. Die Schublade fährt mit einem minimalen Restschwung in ihre beispielsweise nur wenige Millimeter entfernte Endlage.

Hierdurch ist das Führungssystem auch bei vielfachem Einsatz betriebssicher.

Beim Ausfahren des Kolbens strömt Luft aus der Umgebung ggf. unter Verformung des Kolbendichtelementes in den Verdrängungsraum. Die Ausfahrbewegung wird nur wenig verzögert.

Derartige Verzögerungsvorrichtungen können sowohl zur Verzögerung eines einfahrenden als auch zur Verzögerung eines ausfahrenden Kolbens eingesetzt werden. Der Zylinderinnenraum ist dann jeweils in Richtung der zu verzögernden Bewegung aufgeweitet.

Zumindest in der die Zylinderinnenwandung kontaktierenden Oberfläche des Kolbendichtelements können grundwerkstoffsfremde Werkstoffe chemisch gebunden oder physikalisch eingelagert sein.

Die grundwerkstoffsfremden Werkstoffe, z.B. Halogene, in der Oberfläche des Kolbendichtelementes verhindern u.a. ein Anhaften des Kolbendichtelements an der Zylinderinnenwandung. Die veredelte Oberfläche verhindert außerdem eine Beschädigung des Kolbendichtelements beim Überfahren unstetiger Bereiche des Zylinderquerschnittes. Auch löst sich das Kolbendichtelement problemlos von der Zylinderinnenwandung. Die Änderung der Verzögerung in diesem Bereich ist hierdurch auf Dauer zuverlässig wiederholbar.

Am Kolbendichtelement kann auch die gesamte Oberfläche halogenisiert sein. So wird dann zusätzlich z.B. ein Verkleben des Kolbendichtelementes mit dem Kolben verhindert.

Der Zylinderinnenraum kann sich zum Beispiel kegelstumpfförmig aufweiten. Die Steigung des Innenkegels kann beispielsweise 1:50 bis 1:250 betragen. Ggf. können in der Zylinderinnenwandung längsgerichtete Nuten angeordnet sein, mittels derer der Querschnitt des Zylinderinnenraumes zusätzlich vergrößert wird.

Weitere Einzelheiten der Erfindung ergeben sich aus den Unteransprüchen und der nachfolgenden Beschreibung schematisch dargestellter Ausführungsformen.
- Figur 1:: Führungssystem mit Verzögerungsvorrichtung;
- Figur 2:: Verzögerungsvorrichtung;
- Figur 3:: Zylindermantel mit Kopfteil zu Figur 2;
- Figur 4:: Kolbenstange zu Figur 2;
- Figur 5:: Kolbenteil zu Figur 2;
- Figur 6:: Verzögerungsvorrichtung mit Schnappkupplung und zusätzlichem Dichtelement;
- Figur 7:: Kolbenteil zu Figur 6
- Figur 8:: Kolbenstange zu Figur 6;
- Figur 9:: Längsschnitt eines Dichtelements zu Figur 6;
- Figur 10:: Querschnitt zu Figur 8;
- Figur 11:: Führungsschiene mit Haken im verrasteten Zustand;
- Figur 12:: Figur 11 im entrasteten Zustand.

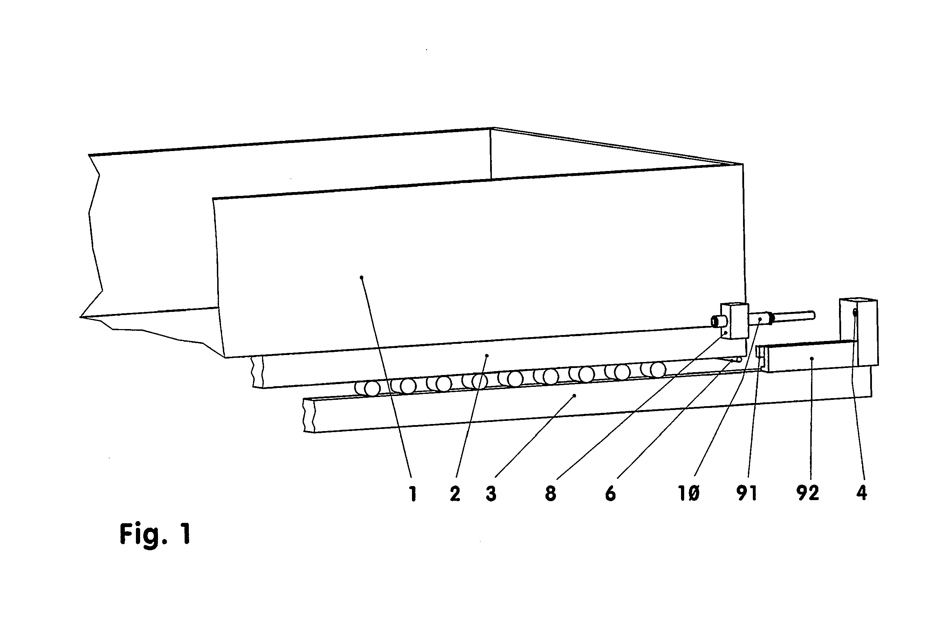

In der Figur 1 ist vereinfacht ein halbseitiges Führungssystem mit einer Verzögerungsvorrichtung (10) dargestellt, das beispielsweise eine Schublade (1) in einem hier nicht dargestellten Möbelstück führt und trägt.

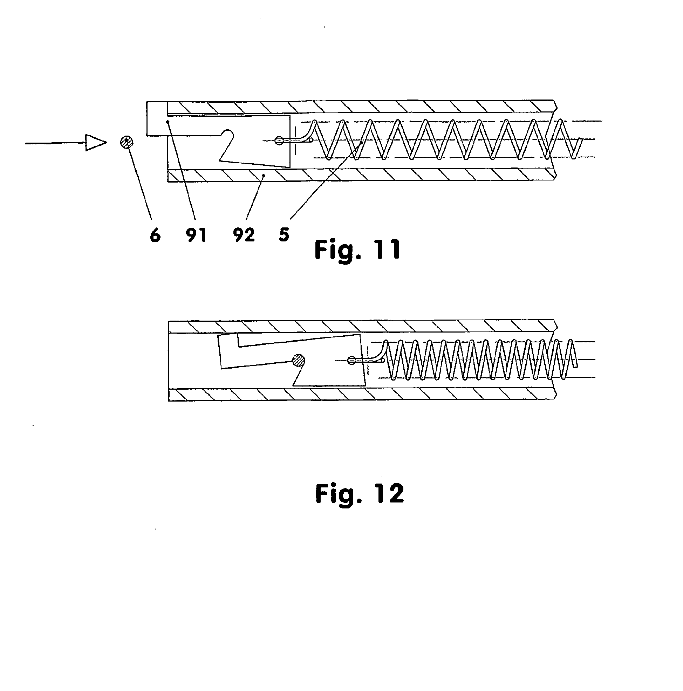

Das in Figur 1 dargestellte Führungssystem umfasst Führungselemente (2, 3) mit dazwischenliegenden, symbolisch dargestellten Wälzkörpern, beispielsweise eine in einer Führungsschiene (92) geführte Feder (5) mit einem Haken (91), vgl. auch die Figuren 11 und 12, und die Verzögerungsvorrichtung (10). In der in Figur 1 dargestellten Position der Schublade (1) ist diese in einer mittleren Hubstellung, z.B. halb eingefahren. Beispielsweise an der Schublade (1) ist in einem Adapter (8) die Verzögerungsvorrichtung (10) befestigt. Dies ist z.B. eine Zylinder-Kolbeneinheit, deren Kolbenstange (41) ausgefahren ist und beispielsweise frei in Hubrichtung über den Rand der Schublade (1) übersteht. In den Figuren 11 und 12 ist die Führungsschiene (92) mit der in ihr geführten Feder (5) dargestellt. In Figur 11 ist die Feder (5), z.B. eine Zugfeder, gedehnt. Ein Ende der Feder (5) ist am Führungselement (3) befestigt, das andere z.B. mit einem Haken (91) in der Führungsschiene (92) beispielsweise verrastet.

Wird die Schublade (1) weiter geschlossen, kommt die Kolbenstange (41) mit einem auf dieser angeordnetem Mitnahmeelement (12) zur Anlage an ein Anschlagelement (4) der Gegenführung (3). Bei Fortsetzung des Schließhubes der Schublade (1) greift z.B. ein an der Unterseite der Schublade (1) angeordneter Bolzen (6) in den Haken (91) ein und schiebt diesen aus seiner Verrastung. Hierbei schwenkt der Haken (91) beispielsweise um den Bolzen (6) und umgreift diesen. Die nun entsperrte Feder (5) zieht die Schublade (1) weiter in Richtung der Schließstellung, vgl. Figur 12. Bei der Fortsetzung der Hubbewegung der Schublade (1) wird deren Bewegung mittels der Verzögerungsvorrichtung (10) verzögert.

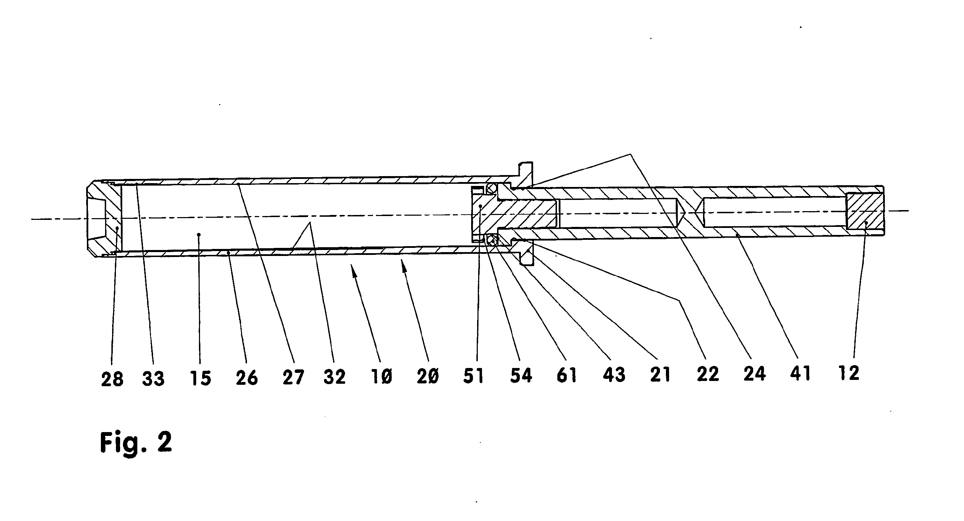

Die Verzögerungsvorrichtung (10), vgl. Figur 2, umfasst einen Zylinder (20), in dem ein Kolben (51, 43, 54, 58) mit Kolbenstange (41) und einem Kolbendichtelement (61) geführt ist. Das nach außen gerichtete Ende der Kolbenstange (41) trägt das Mitnahmeelement (12).

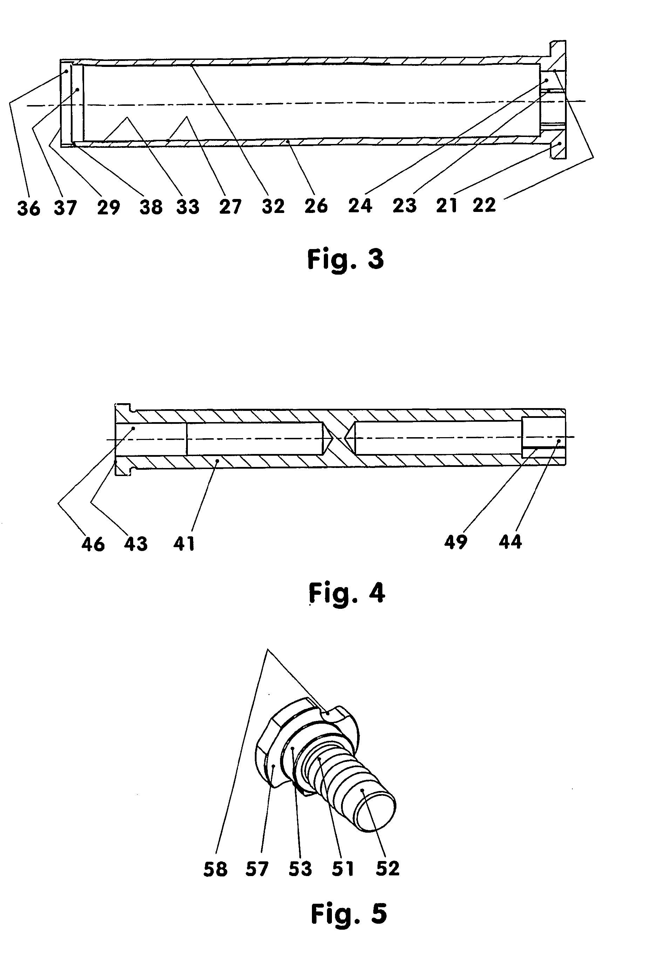

Der Zylinder (20), vgl. auch Figur 3, besteht u.a. aus einem Mantel (26), einem Bodenteil (28) und einem Kopfteil (21). Letzteres ist hier beispielsweise als Flansch (21) ausgebildet.

Die Figur 3 zeigt den Zylindermantel (26) mit dem Kopfteil (21), die hier beispielsweise als Spritzgussteil aus thermoplastischem Kunststoff, z.B. Polyoximethylen, hergestellt sind. Der Zylindermantel (26) ist z.B. auf seiner Außenseite zylindrisch. Seine Länge beträgt beispielsweise etwa das fünfeinhalbfache des Durchmessers. Die nichtzylindrische Zylinderinnenwandung (27) ist z.B. in Form eines Kegelstumpfmantels ausgebildet. Die kleinere Querschnittsfläche dieses Kegelstumpfmantels befindet sich am Kopfteil (21) des Zylinders, die größere Querschnittsfläche am Bodenende (29) des Zylindermantels (26). Die letztgenannte Querschnittsfläche beträgt z.B. etwa 100 mm². Die Steigung dieses Kegels beträgt etwa 1:140. Die Innenwandung (27) ist ggf. poliert. Die minimale Wandstärke des Zylindermantels (26) beträgt etwa 6% seines Außendurchmessers.

In der Zylinderinnenwandung (27) ist weiterhin eine Längsnut (32) vorhanden. Ihre Länge beträgt etwa 70% der Zylinderlänge und endet am Bodenende (29) des Zylindermantels (26). Ihre Breite beträgt etwa 2% des größeren Durchmessers der Zylinderinnenwandung (27). Die Tiefe der Nut (32) beträgt etwa ein Viertel ihrer Breite. Sie ist zur Innenwandung (27) hin scharfkantig, der Nutauslauf hat beispielsweise eine Steigung von 45°. Statt einer einzelnen Nut (32) können auch mehrere Nuten (32) an der Innenwandung (27) angeordnet sein. Auch können sich diese z.B. schraubenlinienförmig an der Innenwandung (27) des Zylindermantels (26) entlangwinden.

Am Bodenende (29) befindet sich eine weitere Längsnut (33) in der Zylinderinnenwandung (27). Diese Längsnut (33), sie ist z.B. um 180° versetzt zur Nut (32), ist beispielsweise doppelt so breit wie die Nut (32), ihre Länge beträgt etwa 15% der Zylinderlänge. Die Tiefe dieser Nut (33) beträgt etwa ein Achtel ihrer Breite. Auch diese Nut (33) ist zur Zylinderinnenwandung (27) hin scharfkantig und hat z.B. eine Auslaufschräge von 45°.

Jede dieser Nuten (32, 33) vergrößert den Querschnitt des Zylinderinnenraumes (25).

Zum Einsetzen des Bodenteils (28) verfügt das Bodenende (29) über eine zweistufige rotationssymmetrische Einkerbung (36, 37). Der Durchmesser der kleineren Einkerbung (37) beträgt etwa 90% der größeren (36). Zur Luftverdrängung bei der Montage des Bodens (28) weist die größere Einsenkung eine Hinterschneidung (38) auf, während von der kleineren Einkerbung (37) aus die Luft in den Innenraum (25) des Zylinders (20) verdrängt wird.

Das Kopfteil (21) umfasst die Kolbenstangendurchführung (22). Diese ist eine Bohrung (22) mit beispielsweise fünf z.B. längsgerichteten steg- oder noppenförmigen Erhebungen (23). Der freie Bohrungsdurchmesser beträgt etwa 75% des größeren Innendurchmessers des Zylindermantels (26). Zwischen den einzelnen Erhebungen (23), deren Höhe z.B. etwa 1% des freien Bohrungsdurchmessers beträgt, sind so nach der Montage der Kolbenstange Durchlasskanäle (24) angeordnet, vgl. Figur 2. Die Figur 4 zeigt die Kolbenstange (41) mit einem angeformten Teil des Kolbens. Die z.B. zylindrische Kolbestange (41) hat etwa die Länge des Zylinders (20), ihr Durchmesser beträgt etwa 75% des größeren Innendurchmessers des Zylindermantels (26), so dass die Kolbenstange im eingebauten Zustand an den Erhebungen (23) der Kolbenstangendurchführung (22) anliegt. Das vordere, hier rechte Ende der Kolbenstange (41) hat beispielsweise eine Aufnahmebohrung (44) für das Mitnahmeelement (12), beispielsweise einen Magneten oder ein anderes Kupplungsteil. Zur Zentrierung des Mitnahmeelementes (12) hat die Aufnahmebohrung (44) z.B. drei jeweils um 120° versetzte längsgerichtete steg- oder noppenförmige Erhebungen (49). Das andere Ende der Kolbenstange (41) ist beispielsweise als Stützfläche (43) ausgebildet. Der Durchmesser der Stützfläche (43) entspricht etwa 98% des kleineren Innendurchmessers des Zylinders (20). Auch auf der Seite der Stützfläche (43) verfügt die Kolbenstange (41) über eine Aufnahmeausnehmung (46). Diese ist beispielsweise kegelförmig und nimmt ein Kolbenteil (51) auf. Das Kolbenteil (51), vgl. Figur 5, hat beispielsweise gestufte Durchmesserbereiche (52, 53). Mit einem Einsteckbereich (52) sitzt das Kolbenteil (51) nach der Montage in der Aufnahmeausnehmung (46) der Kolbenstange (41). Der Durchmesser des nachfolgenden zylindrischen Bereiches (53) beträgt etwa 60% des kleineren Innendurchmessers des Zylinders (20), seine Länge etwa 35% dieses Durchmessers. An diesen zylindrischen Bereich grenzt ein Anlageflansch (54) an. Der Außendurchmesser dieses Anlageflansches (54) beträgt etwa 98% des kleineren Innendurchmessers des Zylinders (20). Der Anlageflansch (54) hat z.B. zwei Kerben (58), deren Nutgrund in den zylindrischen Bereich (53) übergeht.

Bei der Montage der beiden Kolbenteile (41, 51) wird zwischen diese das Kolbendichtelement (61) eingesetzt, vgl. Figur 2. Dieses ist z.B. ein Dichtring (61), dessen Innendurchmesser größer ist als der Durchmesser des zylindrischen Bereiches (53) und dessen Außendurchmesser mindestens so groß ist wie der kleinste Innendurchmesser des Zylinders (20). Der Dichtring (61) besteht beispielsweise aus Nitril-Butadien-Kautschuk. Seine Oberfläche ist quasi gehärtet. Bei dieser sogenannten Härtung werden in die Oberfläche des Werkstoffs Halogene eingelagert. Diese Oberflächenbehandlung vermindert das Anhaften des Kolbendichtelements (61) an der Zylinderinnenwandung (27) sowie am Kolben (51, 43, 54, 58) und somit den Verschleiß.

Nach der Montage des Kolbens (51, 43, 54, 58) im Zylinder (20), vgl. Figur 2, begrenzt innerhalb des Zylinderinnenraumes (25) beispielsweise der Kolben (51, 43, 54, 58) mit dem Zylinderboden (28) einen Verdrängungsraum (15), während der durch die kolbenstangenseitige Seite des Kolbens (51, 43, 54, 58) und den Zylinderkopf (21) begrenzte Raum mit der Umgebung über die Durchlasskanäle (24) kommuniziert. Ist der Kolben (51, 43, 54, 58) des Zylinders (20) ausgefahren, befindet sich dieser im Bereich des kleineren Innendurchmessers des Zylinders (20). Er liegt hierbei außerhalb der Nut (32). Die Innenwandung (27) des Zylinders (20) ist in diesem Bereich glatt.

Beispielsweise beim manuellen Schließen der Schublade (1), vgl. Figur 1, kuppeln die Mitnahmeelemente (4, 12) miteinander sowie der Haken (91) der Feder (5) mit dem Bolzen (6). Sobald der Haken (91) mit dem Bolzen (6) gekuppelt ist, zieht die Feder (5) die Schublade (1) mittels dieser Elemente (91, 6) mit. Hierbei wird in der Verzögerungsvorrichtung (10) die Kolbenstange (41) in den Zylinder (20) eingefahren.

Bei einer schnellen Schließbewegung der Schublade (1), beispielsweise durch einen Bediener verursacht, ist die Volumenänderung des Verdrängungsraum (15) größer als die Luftvolumenänderung durch Abströmen über die Spalte am Kolbendichtelement (61). Das Gas im Verdrängungsraum (15) wird komprimiert, der Druck dort steigt an. Dieser Druck wirkt von der Seite des Verdrängungsraumes (15) auf das Kolbendichtelement (61) und drückt dieses ggf. mit einer Durchmesservergrößerung nach außen gegen die Zylinderinnenwandung (27). Gleichzeitig wird das Kolbendichtelement (61) an die Stützfläche (43) gedrückt. Die im Verdrängungsraum (15) komprimierte Luft kann nicht entweichen. Sie erzeugt eine Gegenkraft gegen die Vortriebskraft der Hubbewegung. Die Hubbewegung wird verzögert. Hierbei wird beispielsweise der Kunststoffzylinder (20) elastisch aufgeweitet.

Entweicht ein geringer Luftvolumenstrom zwischen dem Kolbendichtelement (61) und der kegelstumpfmantelförmigen Innenwand (27), wird der Luftdruck im Verdrängungsraum (15) verringert und die Gegenkraft gegen die Vortriebskraft der Hubbewegung nimmt ab. U.a. die Restschwungkraft schiebt den Kolben (51, 43, 54, 58) in den Bereich des Drosselkanals (32). Sobald das Kolbendichtelement (61) den hinteren Rand des Drosselkanals (32) passiert hat, überströmt die Luft das Kolbendichtelement (61) durch den Drosselkanal (32). Der Luftdruck im Verdrängungsraum (15) wird geringfügig vermindert. Das Kolbendichtelement (61) gleitet hierbei entlang der sich aufweitenden z.B. kegelstumpfmantelförmigen Innenwandung (27). Sobald der Kolben (51, 43, 54, 58) den hinteren Rand der zweiten, kürzeren Nut (33) passiert hat, wird der aus dem Verdrängungsraum (15) abströmende Volumenstrom weiter erhöht. Diese zweite Nut (33) wirkt nun ebenfalls als Drosselkanal. Die im Verdrängungsraum (15) eingeschlossene Luft kann i.d.R. nicht weiter komprimiert werden. Die Volumenänderung ist etwa gleich dem Volumenverlust. Der Druck im Verdrängungsraum (15) nähert sich dem Umgebungsdruck an. Das Kolbendichtelement (61) entspannt sich. Es löst sich fast vollständig von der kegelstumpfmantelförmigen Innenwand (27) des Zylinders (20). Die Bewegungsenergie und damit Geschwindigkeit der Schublade (1) ist dabei soweit herabgesetzt, dass die Schublade (1) sich langsam bis in die Endlage bewegt und dort stehen bleibt.

Wird der Kolben (51, 43, 54, 58) aus dem Zylinder (20) ausgefahren, strömt Luft aus der Umgebung um das Kolbendichtelement (61) und durch die Kerben (58) in den Verdrängungsraum (15). Über den Kolben (51, 43, 54, 58) wird keine Druckdifferenz aufgebaut. Das Kolbendichtelement (61) wird nicht gedehnt. Der Kolben (51, 53, 54, 58) kann - bis auf die Restreibung z.B. in der Kolbenstangendurchführung (22) - frei bewegt werden.

Der Kolben (51, 43, 54, 58) trägt also eine Art entsperrbares Kolbendichtelement-Rückschlagventil (61), das durch den Kolbenhub gesteuert wird. Beim Einfahren des Kolbens (51, 43, 54, 58) in den Zylinder (20) sperrt das Rückschlagventil (61), beim Ausfahren wird es entsperrt.

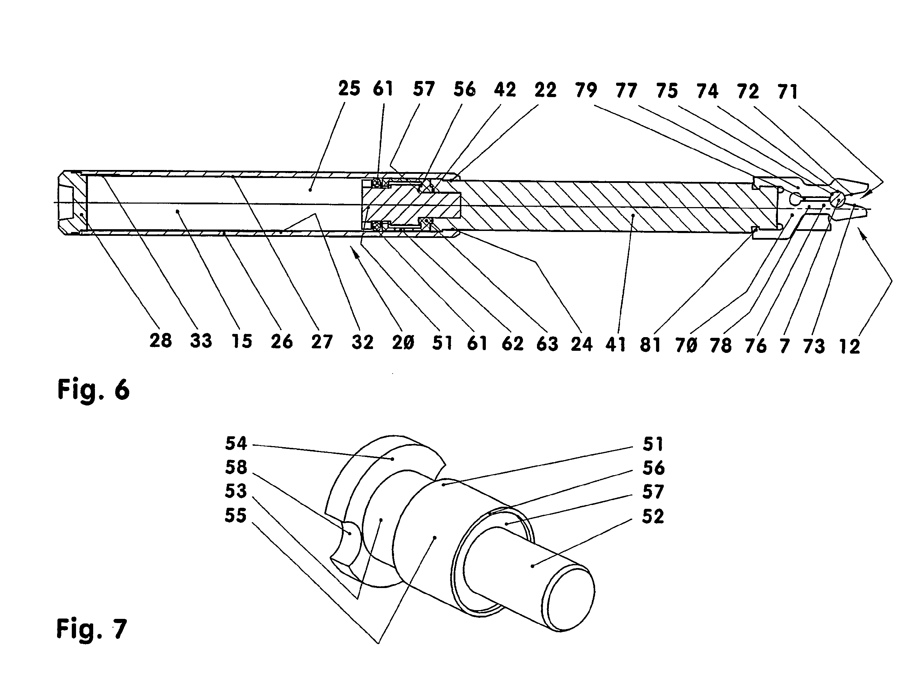

Die Figur 6 zeigt eine Variante einer Verzögerungsvorrichtung mit einem Kolbendichtelement (61) und einem hierzu in Reihe geschalteten Dichtelement (62) sowie einer Mitnahmevorrichtung (12) in Form einer Schnappkupplung (70). Bei dieser Variante ist beispielsweise die Verzögerungsvorrichtung (10) am Führungselement (3) und das Gegenelement (4) an der Schublade (1) angeordnet, vgl. Figur 1.

Der Zylinder (20) hat auch hier eine innenkegelstumpfmantelförmige Innenwandung (27), die sich in Einschubsrichtung der Kolbenstange (41) aufweitet sowie z.B. zwei Drosselkanäle (32, 33) unterschiedlicher Länge. Die Kolbenstangendurchführung (22) ist beispielsweise ringförmig.

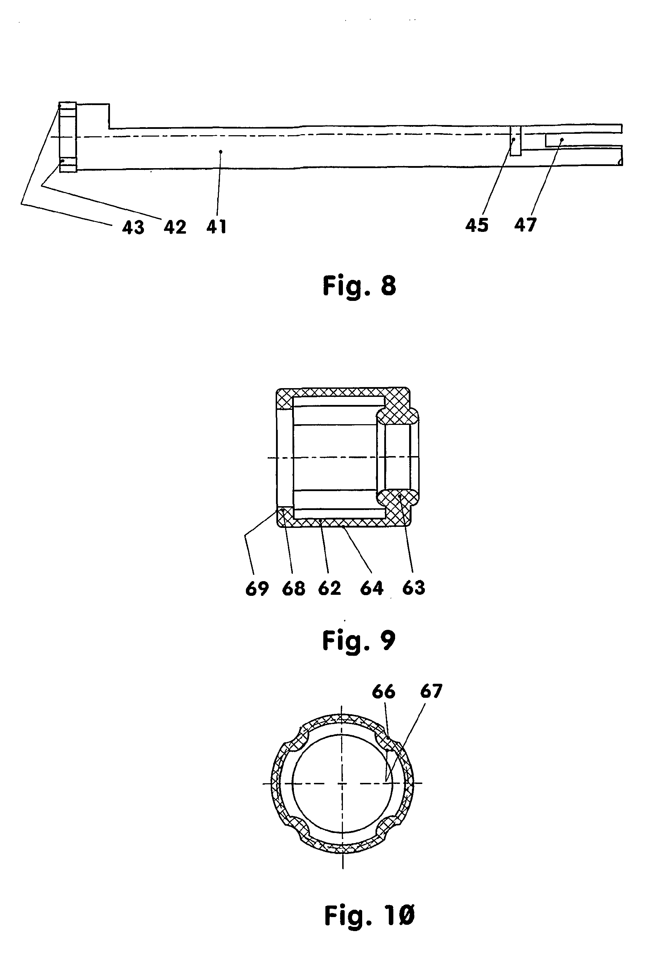

Die Kolbenstange (41), vgl. Figur 8, hat z.B. die Querschnittsform eines Kreisabschnitts mit einem Zentriwinkel größer als 180°. Der zum Kreisvollschnitt fehlende Querschnittsbereich bildet einen Luftdurchlasskanal (24).

Das kolbenseitige Ende der Kolbenstange weist auf der Stützfläche (43) eine Ringnut (42) auf.

Am freien Ende der Kolbenstange (41) sitzt die Schnappkupplung (70), die in das entsprechende Gegenelement (4), z.B. einen Bolzen (7) der Schublade (1) eingreift, vgl. Figur 6. Die Schnappkupplung (70) verfügt hierfür über einen Einzugsbereich (71), einen Haltebereich (74) und einen flexiblen Biegebereich (76). Der Einzugsbereich (71) hat einen obere (72) und eine untere Gleitfläche (73), die zusammen - zur Bildung eines Einführkeils - einen spitzen Winkel einschließen. Im Haltebereich (74) gehen die obere (72) und die untere Gleitfläche (73) in jeweils eine Halbschale (75) über, deren Öffnungen zueinander zeigen. Im Biegebereich (76) ist der obere (77) und der untere Teil (78) der Schnappkupplung (70) durch einen parallelen Spalt (79) getrennt. Die Wandstärke der Schnappkupplung (70) ist hier geringer als in den vorgenannten Bereichen (71, 74). Der Spalt (75) endet zur Vermeidung von Kerbspannungen in einer Kerbbohrung.

Bei der Annäherung der Schublade (1) an die Verzögerungsvorrichtung (10) wird der Bolzen (7) an der Schublade (1) in den Einzugsbereich (71) eingeführt. Der obere (77) und der untere Teil (78) der Schnappkupplung (70) werden auseinandergebogen und der führungsseitige Bolzen (7) verrastet weitgehend geräuschlos im Haltebereich (74) der Schnappkupplung (70). Beim Ausziehen der Schublade (1) biegt der Bolzen (7) das obere (77) und das untere Teil (78) der Schnappkupplung (70) auseinander. Hierdurch wird der Bolzen (7) freigegeben. Zur Befestigung der Schnappkupplung (70) auf der Kolbenstange (41), vgl. die Figuren 6 und 8, verfügt letztere z.B. über eine exzentrisch angeordnete Längsnut (47) sowie auf ihrer Ober- und Unterseite über eine halbseitig eingefräste Haltenut (45), vgl. Figur 8. In diese Haltenuten (45) greifen Halteklammern (81) der Schnappkupplung (70) ein und verrasten die Schnappkupplung (70) an der Kolbenstange (41).

Am anderen Ende der Kolbenstange (41) ist ein Kolbenteil (51) fixiert, vgl. Figuren 6 und 7. Dieses hat gestufte Durchmesserbereiche. Ein erster Bereich (52), sein Durchmesser beträgt etwa die Hälfte des kleineren Innendurchmessers des Zylinders (20), ist zu etwa zwei Dritteln seiner Länge in der Kolbenstange (41) befestigt. Der Durchmesser des zentralen Bundes (55) des Kolbenteils (51) beträgt etwa das anderthalbfache dieses Durchmessers. Zur Kolbenstange (41) hin weist die Stirnseite (56) des zentralen Bundes (55) eine Ringnut (57) auf.

Der Durchmesser eines weiteren Bereiches des Kolbenteils (51) beträgt etwa 80% des Durchmessers des zentralen Bundes (55). Dieser Bereich wird durch einen Anlageflansch (54) begrenzt.

Zwischen der Kolbenstange (41) und dem Kolbenteil (51) sitzt mit einem Einspannbereich (63) formschlüssig in den beiden Ringnuten (57, 42) das z.B. topfförmige Dichtelement (62), vgl. die Figuren 9 und 10. Der Außendurchmesser des Dichtelementes (62) entspricht beispielsweise seiner Länge und beträgt z.B. etwa 98% des kleineren Innendurchmessers des Zylinders (20). Seine Wandstärke beträgt etwa 3% seines Außendurchmessers. Auf der zylindrischen Außenfläche sind beispielsweise vier Längsnuten (66) mit einer Tiefe von etwa 3% des Außendurchmessers des Dichtelements (62) angeordnet, so dass diese auf die Innenseite des Dichtelements (62) als Erhebungen (67) überstehen. Das dem Einspannbereich (63) gegenüberliegende Ende des Dichtelements (62) ist als Innenbund (68) ausgebildet und hat einen Innendurchmesser von etwa 70% des Außendurchmessers des Dichtelements (62). Die axiale Außenseite des Dichtelementes (62) bildet die Anlagefläche (69).

Dieses Dichtelement (62) ist beispielsweise aus Nitril-Butadien-Kautschuk mit halogenisierter Oberfläche.

Das Dichtelement (62) kann auch ohne Einspannbereich (63) ausgeführt sein. Es hat dann die Form einer Hülse, die z.B. mit einer ihrer Stirnseiten an der Stützfläche (43) anliegt.

Zwischen dem Dichtelement (62) und dem Anlageflansch (54) ist das Kolbendichtelement (61) angeordnet. Dieses ist beispielsweise genauso aufgebaut wie das anhand der Figur 2 beschriebene Kolbendichtelement (61). Auch dieses Kolbendichtelement (61) hat radiales Spiel zum Kolbenteil (51).

Bei der Montage werden das Dichtelement (62) und das Kolbendichtelement (61) auf das Kolbenteil (51) gesetzt und letzteres in die Kolbenstange (41) eingesetzt und gesichert. Die Öffnung des Dichtelements (62) zeigt hierbei zum Kolbendichtelement (61). Das Dichtelement (62) hat hierbei außer im Einspannbereich (63) radiales Spiel zum Kolbenteil (51), wobei aber die Erhebungen (67) ggf. teilweise aufliegen. Die Erhebungen (67) ermöglichen so eine gleichmäßige Hinterlüftung des Dichtelements (62). Die derart vormontierte Kolbenstange (41) wird dann über die Bodenseite in den Zylinder (20) eingeschoben und der Boden (28) des Zylinders (20) verschlossen. Nach der Montage der Schnappkupplung (70) auf der Kolbenstange (41) wird die gesamte Einheit in das Führungssystem eingebaut. Statt eines Dichtelementes (62) und eines Kolbendichtelements (61) kann auch ein einteiliges Dichtelement eingesetzt werden. Dieses ist dann beispielsweise ähnlich aufgebaut wie das Dichtelement (62), verfügt aber über mindestens eine zusätzliche radial nach außen abstehende Dichtlippe, mit der es die Zylinderinnenwandung (27) kontaktiert.

Bei ausgefahrener Kolbenstange (41), vgl. Figur 6, ist das Dichtelement (62) z.B. unverformt und liegt nicht an der Zylinderinnenwandung (27) an. Außerhalb des Einspannbereiches (63) hat es radiales Spiel zum Kolbenteil (51). Der Dichtring (61) liegt beispielsweise axial beweglich zwischen der Anlagefläche (69) und dem Anlageflansch (54) bereichsweise an der Zylinderinnenwandung (27) an.

Beim üblichen Einfahren der Kolbenstange (41) in den Zylinder (20) legt sich das Kolbendichtelement (61) an die Zylinderinnenwandung (27) und an das Dichtelement (62) an. Die Luft im Verdrängungsraum (15) wird komprimiert und drückt nach dem Prinzip der Selbsthilfe das Kolbendichtelement (61) und das Dichtelement (62) radial nach außen. Diese pressen sich an die Zylinderinnenwandung (27) an und verzögern durch ihre Reibung an der Zylinderinnenwandung (27) zusätzlich die Hubbewegung der Kolbenstange (41). Sobald das Kolbendichtelement (61) den hinteren Rand des Drosselkanals (32) passiert hat, wird Luft aus dem Verdrängungsraum (15) über den Drosselkanal (32) und die Längsnuten (66) in die Umgebung verdrängt.

Mit zunehmendem Hub der Kolbenstange (41) verringert sich die Anlagefläche des Dichtelementes (62) an der Zylinderinnenwandung (27). Die durch den Luftdruck verursachte Normalkraft auf die Zylinderinnenwandung (27) nimmt ab und damit die durch die Reibung bedingte Verzögerung der Hubbewegung. Sobald das Kolbendichtelement (61) den hinteren Rand des Drosselkanals (33) passiert hat, strömt zusätzlich Luft aus dem Verdrängungsraum (15) über die Drosselkanäle (33, 32, 66, 24) in die Umgebung. Der Druck im Verdrängungsraum (15) fällt z.B. schlagartig ab. Das Kolbendichtelement (61) und das Dichtelement (62) nehmen wieder ihre Ausgangslage vor dem Beginn der Hubbewegung an. Die Schublade (1) fährt nun langsam und mit nur noch geringer Verzögerung in ihre Endlage. Dort bleibt sie ohne Rückprall stehen.

Wird die Schublade (1) wieder ausgezogen, strömt Luft aus der Umgebung über die Drosselkanäle (24, 66, 32, 33) in den Verdrängungsraum (15). Das Dichtelement (62) bleibt unverformt und hat keinen Kontakt mit der Zylinderinnenwandung (27). Das Kolbendichtelement (61) legt sich bei der Ausfahrbewegung an den Anlageflansch (54) an, der die Kerben (58) umfasst. Während der Ausfahrbewegung strömt nun die Luft ungehindert aus der Umgebung in den Verdrängungsraum (15). Die Ausfahrbewegung verläuft zumindest annähernd widerstandsfrei.

Sobald die Kolbenstange (41) vollständig ausgefahren ist, löst sich die Schnappkupplung (70) weitgehend geräuschlos vom Bolzen (7). Die Verzögerungsvorrichtung (10) kommt außer Eingriff.

Der Zylinder (20) der Verzögerungseinrichtung (10) kann statt eines konischen Raumes in Quer- und Längsrichtung auch andere, zumindest bereichsweise stetige Formen aufweisen. So kann z.B. ein konischer Raum mit großer Kegelsteigung in einen Raum mit kleiner Kegelsteigung übergehen. Auch kann sich an den konischen Raum ein polygonförmiger Raum anschließen. So können verschiedene Funktionen der Verzögerung über den Hub des Kolbens (51, 43, 54, 58) erzeugt werden.

Die Nuten können statt durchgehender Längsnuten (32, 33) auch unterbrochene Nuten sein, wobei die einzelne Nut z.B. länger ist als die Länge des Kolbens (51, 43, 54, 58). Auch können eine oder mehrere Nuten (32, 33) schraubenlinenförmig an der Innenwandung (27) angeordnet sein. Die Nuten können parallele Flanken aufweisen oder sich z.B. aufweiten. Auch kann beispielsweise die Tiefe der einzelnen Nuten (32, 33) zum Verdrängungsraum (15) hin zunehmen. Anstatt der Nuten kann in der Zylinderinnenwandung (27) z.B. auch eine oder mehrere längsgerichtete Erhebungen angeordnet sein, die dann Drosselkanäle seitlich begrenzen.

Die Verzögerung der Verzögerungsvorrichtung kann beispielsweise auch einstellbar sein. So kann z.B. der Querschnitt der Luftdurchführungskanäle (24) veränderlich sein und so der aus dem Verdrängungsraum (15) verdrängte Luftstrom eingestellt werden.

Die Feder (5) kann auch innerhalb des Zylinders (20) angeordnet sein. Sie ist dann z.B. eine Druckfeder, die zwischen dem Kopfteil (21) des Zylinders (20) und dem Kolben (51, 43, 54, 58) angeordnet ist. In diesem Fall wird dann beispielsweise die ausgefahrene Kolbenstange (41) mittels einer inner- oder außerhalb des Zylinders (20) angeordneten, z.B. durch die Schublade betätigte Verriegelung ver- und entrastet.

### Bezugszeichenliste:

- 1: Schublade
- 2: Führungselemente, Führungsschienen
- 3: Führungselemente, Führungsschienen
- 4: Anschlagelement, Gegenstück zu (12)
- 5: Feder
- 6: Bolzen
- 7: Bolzen
- 8: Adapter für (10)

- 10: Verzögerungsvorrichtung
- 12: Mitnahmeelement, Magnet

- 15: Verdrängungsraum

- 20: Zylinder
- 21: Flansch, Kopfteil
- 22: Kolbenstangendurchführung, Bohrung
- 23: Erhebung
- 24: Luftdurchlasskanäle
- 25: Zylinderinnenraum
- 26: Zylindermantel
- 27: Zylinderinnenwandung
- 28: Bodenteil, Zylinderboden
- 29: Bodenende

- 32: Drosselkanal lang, Nut in (27)
- 33: Drosselkanal kurz, Nut in (27)

- 36, 37: Einkerbungen
- 38: Hinterschneidung

- 41: Kolbenstange
- 42: Ringnut
- 43: Kolbenteil, Stützfläche
- 44: Aufnahmebohrung
- 45: Haltenut
- 46: Aufnahmeausnehmung
- 47: Längsnut
- 49: Erhebungen

- 51: Kolbenteil
- 52: Einsteckbereich
- 53: zylindrischer Bereich
- 54: Anlageflansch verdrängungsraumseitig
- 55: zentraler Bereich
- 56: Stirnseite
- 57: Ringnut
- 58: Kerben

- 61: Kolbendichtelement; Dichtelement, dehnfähig
- 62: Dichtelement, topfförmig
- 63: Einspannbereich
- 64: Außenseite

- 66: Längsnuten
- 67: Erhebungen
- 68: Innenbund
- 69: Anlagefläche
- 70: Schnappkupplung
- 71: Einzugsbereich
- 72: Gleitfläche, oben
- 73: Gleitfläche, unten
- 74: Haltebereich
- 75: Halbschale
- 76: Biegebereich, flexibel
- 77: Oberer Teil von (70)
- 78: Unterer Teil von (70)
- 79: Spalt

- 81: Halteklammern

- 91: Haken
- 92: Führungsschiene

## Patentansprüche

1. Führungssystem mit einer pneumatischen Verzögerungsvorrichtung (10), die eine, der Hubbewegung eines in einem Zylinder (20) mittels einer durch interne und externe Kräfte belasteten Kolbenstange (41) axial geführten, mit mindestens einem Kolbendichtelement (61) ausgestatteten, einen Verdrängungsraum (15) gegen die Umgebung abgrenzenden Kolben (51) entgegengerichtete Kraft gegen die Umgebung der Leckagestrom zwischen dem Verdrängungsraum und der Umgebung zumindest hubrichtungsabhängig ist und das Kolbendichtelement die Zylinderinnenwandung (27) zumindest bei Lage des Kolbens in der dem Verdrängungsraum abgewandten Endlage im drucklosen Zustand kontaktiert,
- wobei sich der Querschnitt des Zylinderinnenraumes (25) entlang des Kolbenhubes zumindest bereichsweise stetig aufweitet, wobei der größte Querschnitt am Ende des Verdrängungsraumes (15) liegt
- wobei das Kolbendichtelement (61) zumindest in der verdrängungsraumseitigen Endlage des Kolbens (51, 43, 54, 58) nicht an der Zylinderinnenwandung (27) abdichtend anliegt und **dadurch gekennzeichnet,**
**dass** ab einer definierten Hubstellung des Kolbens (51, 43, 54, 58) die Kolbenstange (41) mit einem vorgespannten Energiespeicher verrastet und diesen entspannt, so dass die freigesetzte interne Kraft der aufgebrachten externen Kraft gleichgerichtet ist.

2. Führungssystem nach Anspruch 1, **dadurch gekennzeichnet, dass** zumindest in der die Zylinderinnenwandung (27) kontaktierenden Oberfläche des Kolbendichtelements (61) grundwerkstoffsfremde Werkstoffe chemisch gebunden oder physikalisch eingelagert sind.

3. Führungssystem nach Anspruch 2, **dadurch gekennzeichnet, dass** die grundwerkstoffsfremden Werkstoffe Halogene sind.

4. Führungssystem nach Anspruch 1, **dadurch gekennzeichnet, dass** der Verdrängungsraum (15) in der der Kolbenstange (41) abgewandten Seite des Zylinders (20) liegt.

5. Führungssystem nach Anspruch 1, **dadurch gekennzeichnet, dass** im Bereich der verdrängungsraumseitigen Endlage des Kolbens (51, 43, 54, 58) im Zylinder (20) in der Zylinderinnenwandung (27) mindestens ein Drosselkanal (33) angeordnet ist, dessen Länge mindestens 5% des Kolbenhubes beträgt.

6. Führungssystem nach Anspruch 5, **dadurch gekennzeichnet, dass** in dieser Endlage des Kolbens (51, 43, 54, 58) der Drosselkanal (33) den Verdrängungsraum (15) mit der Umgebung verbindet.

7. Führungssystem nach Anspruch 5, **dadurch gekennzeichnet, dass** in der Zylinderinnenwandung (27) außerhalb des kleinsten Querschnittes des Zylinderinnenraumes (25) mindestens ein zweiter, den Verdrängungsraum (15) mit der Umgebung verbindender Drosselkanal (32) angeordnet ist, dessen Länge mindestens 25% des Kolbenhubes beträgt.

8. Führungssystem nach Anspruch 1, **dadurch gekennzeichnet, dass** die Aufweitung der Innenwandung (27) des Zylinders (20) kegelförmig ist, wobei die Steigung des Innenkegels zwischen 1:50 und 1:250 liegt.

9. Führungssystem nach Anspruch 3, **dadurch gekennzeichnet, dass** das Kolbendichtelement ein Dichtring (61) aus Nitril-Butadien-Kautschuk ist, in dessen gesamter Oberfläche Halogene chemisch gebunden sind.

10. Führungssystem nach Anspruch 1, **dadurch gekennzeichnet, dass** das Kolbendichtelement (61) Teil eines topfförmig ausgebildeten Dichtelementes (62) ist, das am Kolben (51, 43, 54, 58) befestigt ist, wobei die Öffnung des Dichtelementes (62) zum Verdrängungsraum (15) zeigt.

11. Führungssystem nach Anspruch 10, **dadurch gekennzeichnet, dass** das Dichtelement (62) auf seinem äußeren Umfang mindestens eine Längsnut (66) aufweist.

12. Führungssystem nach Anspruch 10, **dadurch gekennzeichnet, dass** die Länge des Dichtelements (62) mindestens seinem Außendurchmesser entspricht.

13. Führungssystem nach Anspruch 4, **dadurch gekennzeichnet, dass** die Verzögerungsvorrichtung (10) im Bereich der Kolbenstangendurchführung (22) Luftdurchlasskanäle (24) aufweist.

## Claims

1. Guide system comprising pneumatic delay means (10) configured to build up a force opposite to the movement of a piston (51) guided axially in a cylinder (20) by a piston rod (41) loaded with internal and external forces, said piston (51) provided with at least one piston sealing element (61) and delimiting a displacement space (15) against the environment, with the leakage flow between the displacement space and the environment being dependent at least on the direction of piston movement, and with the piston sealing element in the pressure-free condition engaging inner cylinder wall (27) at least as said piston assumes its end position opposite said displacement space,
- with the cross-sectional area of interior cylinder space (25) being configured to expand steadily along the piston stroke at least in sections, with the largest such cross-sectional area disposed at the end of displacement space (15); and
- with piston sealing element (61) not sealingly engaging inner cylinder wall (27) at least in the end position adjacent said displacement space of piston (51, 43, 54, 58) ;
**characterized in that**,
- beginning at a defined position within the stroke of piston (51, 43, 54, 58), piston rod (41) locks to and relieves biased energy storage means, so that the released internal force is aligned in parallel with the applied external force.

2. Guide system as claimed in claim 1, **characterized in that** substances alien to the basic material of the device are chemically bonded or physically embedded at least in the surface engaging inner cylinder wall (27) of piston sealing element (61).

3. Guide system as claimed in claim 2, **characterized in that** said substances alien to the basic material of the device comprise halogens.

4. Guide system as claimed in claim 1, **characterized in that** displacement space (15) is disposed in the side opposite piston rod (41) of cylinder (20).

5. Guide system as claimed in claim 1, **characterized in that** at least one flow-restricting channel (33) is provided in inner cylinder wall (27) in the region of piston (51, 43, 54, 58) adjacent the displacement space within cylinder (20), the length of said floe-restricting channel being at least 5 % of the piston stroke.

6. Guide system as claimed in claim 5, **characterized in that** displacement space (15) fluidly communicates with the environment through flow-restricting channel (33) in the aforesaid end position of piston (51, 43, 54, 58).

7. Guide system as claimed in claim 5, **characterized in that** at least one second flow-restricting channel (32) having a length of at least 25 % of the piston stroke is provided in the inner cylinder wall (27) outside the smallest cross sectional area position of inner cylinder space (25), said second flow-restricting channel fluidly communicating displacement space (15) to the environment.

8. Guide system as claimed in claim 1, **characterized in that** the expansion of inner wall (27) of cylinder (20) is conical in shape, with the slope of the inner cone being between 1:50 and 1:250.

9. Guide system as claimed in claim 3, **characterized in that** said piston sealing element comprises a sealing ring (61) made of nitrile-butadien caoutchouc having halogens chemically bonded in the entire surface thereof.

10. Guide system as claimed in claim 1, **characterized in that** piston sealing element (61) is part of a cup-shaped sealing element (62) secured to piston (51, 43, 54, 58), with the opening of sealing element (62) turned towards displacement space (15).

11. Guide system as claimed in claim 10, **characterized in that** sealing element (62) has at least one longitudinal groove (66) in its peripheral surface.

12. Guide system as claimed in claim 10, **characterized in that** sealing element (62) has a length corresponding at least to its outer diameter.

13. Guide system as claimed in claim 4, **characterized in that** delay means (10) has therein air passage channels (24) extending in the region of piston rod feed-through opening (22).

## Revendications

1. Système de guidage équipé d'un dispositif pneumatique de décélération (10) qui crée une force opposée au mouvement de la course d'un piston (51) guidé axialement dans un cylindre au moyen d'une tige de piston (41), soumise à des forces internes et externes, et pourvu d'au moins un élément d'étanchéité de piston (61) et délimitant une chambre de refoulement (15) par rapport à l'environnement, le courant de fuite entre la chambre de refoulement et l'environnement agissant au moins en fonction de la direction de la course et l'élément d'étanchéité entrant en contact avec la paroi intérieure du cylindre (27), au moins lorsque le piston, en l'absence de pression, se trouve dans sa position finale opposée à la chambre de refoulement,
- la section transversale de l'espace intérieur du cylindre (25) s'élargissant continuellement, tout au moins par endroits, le long de la course de piston, la plus grande section se trouvant au bout de la chambre de refoulement (15) et
- l'élément d'étanchéité du piston (61) ne collant pas à la paroi intérieure du cylindre (27) en assurant l'étanchéité, tout au moins lorsque le piston se trouve en position de fin de course dans la chambre de refoulement (51, 43, 54, 58), **caractérisé en ce**
- **que** la tige de piston (41), à partir d'une position définie du piston, s'encliquete avec un accumulateur d'énergie en position de charge et qu'elle détend cet accumulateur d'énergie de sorte que la force interne libérée est orientée dans la même direction que la force externe exercée.

2. Système de guidage selon la revendication 1, **caractérisé en ce que** des matériaux autres que des matériaux de base sont chimiquement liés ou incorporés par voie physique dans la surface de l'élément d'étanchéité du piston (61) qui est en contact avec la paroi intérieure du cylindre (27).

3. Système de guidage selon la revendication 2, **caractérisé en ce que** les matériaux autres que les matériaux de base sont des halogènes.

4. Système de guidage selon la revendication 1, **caractérisé en ce que** la chambre de refoulement (15) du cylindre (20) se trouve dans la partie opposée à la tige du piston (41).

5. Système de guidage selon la revendication 1, **caractérisé en ce qu'**au moins un canal d'étranglement (33) dont la longueur est au moins de 5% de la longueur de la course du piston est disposé dans la paroi intérieure (27) du cylindre (20), dans la zone de la position finale du piston (51, 43, 54, 58) côté chambre de refoulement.

6. Système de guidage selon la revendication 5, **caractérisé en ce que**, dans cette position finale du piston (51, 43, 54, 58), le canal d'étranglement (33) relie la chambre de refoulement (15) à l'environnement.

7. Système de guidage selon la revendication 5, **caractérisé en ce qu'**au moins un deuxième canal d'étranglement (32) dont la longueur est au moins de 25% de la longueur de la course du piston et qui relie la chambre de refoulement (15) à l'environnement est disposé dans la paroi intérieure du cylindre (27), à l'extérieur de la plus petite section transversale de l'espace intérieur du cylindre (25).

8. Système de guidage selon la revendication 1, **caractérisé en ce que** l'élargissement de la paroi intérieure (27) du cylindre (20) est conique, la pente du cône intérieur étant entre 1:50 et 1:250.

9. Système de guidage selon la revendication 3, **caractérisé en ce que** l'élément d'étanchéité du piston est une bague d'étanchéité (61) en caoutchouc nitrile-butadiène présentant des halogènes chimiquement liés dans toute sa surface.

10. Système de guidage selon la revendication 1, **caractérisé en ce que** l'élément d'étanchéité (61) fait partie d'un élément d'étanchéité (62) en forme de pot qui est fixé sur le piston (51, 43, 54, 58), l'ouverture de l'élément d'étanchéité (62) étant orientée vers la chambre de refoulement (15).

11. Système de guidage selon la revendication 10, **caractérisé en ce que** l'élément d'étanchéité (62) présente au moins une rainure longitudinale (66) sur son pourtour extérieur.

12. Système de guidage selon la revendication 10, **caractérisé en ce que** la longueur de l'élément d'étanchéité (62) correspond au moins à son diamètre extérieur.

13. Système de guidage selon la revendication 4, **caractérisé en ce que** le dispositif de décélération (10) présente des canaux de passage de l'air (24) dans la zone de passage (22) de la tige de piston.
